(19) Europäisches Patentamt

European Patent Office

Office européen des brevets

(11) **EP 0 658 882 B1**

(12) **EUROPEAN PATENT SPECIFICATION**

(45) Date of publication and mention
of the grant of the patent:
**28.02.2001 Bulletin 2001/09**

(51) Int Cl.[7]: **G11B 5/54**

(21) Application number: **93120322.8**

(22) Date of filing: **16.12.1993**

(54) **Disk device**

Plattengerät

Dispositif de disque

(84) Designated Contracting States:
**DE GB**

(43) Date of publication of application:
**21.06.1995 Bulletin 1995/25**

(60) Divisional application: **99116037.5 / 0 959 455**
**99116062.3 / 0 959 456**
**99116230.6 / 0 959 457**
**99116231.4 / 0 959 458**

(73) Proprietor: **SONY CORPORATION**
**Tokyo 141 (JP)**

(72) Inventors:
• **Kubo, Takeshi, c/o Sony Corporation**
**Tokyo (JP)**

• **Enomoto, Kenji, c/o Sony Corporation**
**Tokyo (JP)**

(74) Representative:
**Körber, Wolfhart, Dr. rer.nat. et al**
**Patentanwälte**
**Mitscherlich & Partner,**
**Sonnenstrasse 33**
**80331 München (DE)**

(56) References cited:
**EP-A- 0 089 277      EP-A- 0 264 775**
**WO-A-92/11630      GB-A- 2 237 920**

• **PATENT ABSTRACTS OF JAPAN vol. 14, no. 508**
**(P-1128) 7 November 1990 & JP-A-02 210 677**
**(HITACHI) 22 August 1990**

## Description

## BACKGROUND OF THE INVENTION

### FIELD OF THE INVENTION

The present invention relates to a disk device for moving an arm which supports a head and for positioning the head in a desired position.

### DESCRIPTION OF THE PRIOR ART

Now, a CSS (Contact Start Stop) system is applied to a generally used magnetic hard disk device. In this system, when a magnetic hard disk is stopped, a magnetic head is in contact with a disk surface, and the magnetic head is lifted in accordance with the rotation of the disk.

USP 4,933,785 discloses an N-CSS (Non-Contact Start Stop) type magnetic hard disk device. In the device, a cam follower member is provided inside a head slider on a surface, on a disk side, of a head support suspension of a rotary actuator assembly (i.e., on an actuator coil side), and a cam surface assembly is provided in the vicinity of an outer peripheral portion of the disk. During the unloading, the rotary actuator assembly is moved outside the disk and the cam follower member is brought into contact with the cam surface. Thereafter, the rotary actuator assembly is moved along the cam surface and is held stationary in a lock position.

Also, USP 5,027,241 discloses an N-CSS type magnetic hard disk device. In this device, a cylindrical loading tab is provided at a tip end of a head supporting suspension of a rotary actuator assembly, and a loading slant structure is provided in the vicinity of an outer peripheral portion of the disk. During the unloading, the rotary actuator assembly is moved to outside of the loading slant structure and the loading tab is brought into contact with the slanted surface of the loading slant structure. Thereafter, the rotary actuator assembly is moved along the slant surface and is held stationary in a parking region.

The Japanese Mechanical Association (No. 900-52) Lecture Paper (1990, August 23 and 24, Tokyo, Mechatronics), 204, entitled "The Load/Unload Dynamics for In-line Type Flying Head Systems in Magnetic Disk Storage" shows measurement examples relating to the contact/non-contact in an N-CSS system. In the measurement examples, however, the load/unload operation of the slider is carried out by an arm which carries a suspension. This system is different from that of the present invention. Also, the paper shows the measurement examples in which it was measured whether or not the slider was brought into contact with the disk surface at a loading speed of 80mm/s and 40mm/s and at an unloading speed of 5mm/s. However, the paper is silent with respect to the preferable numerical range. With respect to the posture of the slider, the paper describes that it is preferable for the non-contact loading to adapt the case where the pitch angle is zero or positive, but does not disclose a specific measure at all as to how the positive pitch angle is attained.

In the conventional CSS magnetic hard disc device, liquid contained with the device would adhere to the disc surface so that a attraction phenomenon (stick). In order to avoid this, a texture which roughens the disc surface is formed, but this is opposite to the basic demand that the magnetic head should be close to the magnetic film of the disc as much as possible and is also contradictory to the future demand that the recording should be carried out at the higher and higher density.

Also, in the N-CSS system disclosed in the above-described USP 4,933,785, the cam follower member is provided inside the head slider, and therefore, during the unloading, a large force is necessary to lift up the head slider.

Also, if the cylindrical loading tab is used as shown in the above-described USP 5,027,241, the sliding area with the loading slant structure is increased. As a result, contamination due to the wear powder or the like would occur. Also, the loading tab is made cylindrical, it is necessary to enhance the positional precision of the loading slant structure.

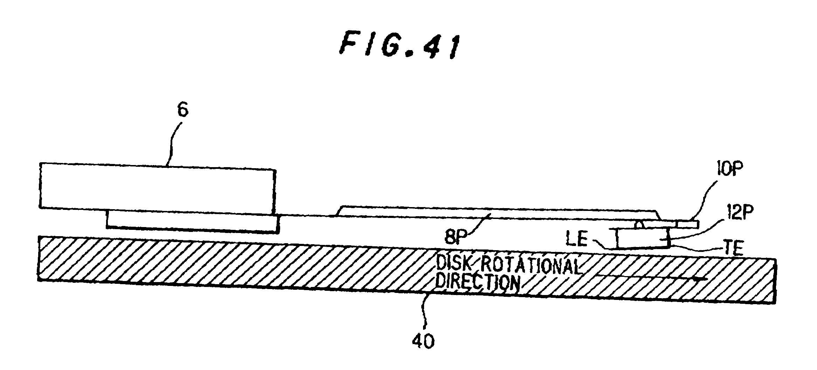

Also, in the loading and unloading of the conventional N-CSS type magnetic hard disk drive, as shown in Fig. 41, a leading end LE of a head slider 12P mounted through a flexure 10P on a suspension 8P is provided closer to the disk 40 than a trailing end TE. Accordingly, it takes such an angle/posture that the leading end LE is projected toward the disk surface earlier than the trailing end TE. Namely, since the leading end LE of the head slider 12P is closer to the disk 40 than the trailing end TE, a dynamic pressure would hardly occur between the disc 40 and the head slider 12P, and the disk 40 would be likely to contact (collide) with the head slider 12P.

## SUMMARY OF THE INVENTION

In view of the foregoing difficulties, an object of the present invention is to provide a disk device in which a contamination due to a sliding wear is small, it is unnecessary to unduly increase a positional precision of mechanical parts, and a large lifting force is unnecessary in unloading.

The disk device according to the preamble of claim 1 is known from WO-A-92 11630.

The object of the invention is achieved by the disk device according to claim 1.

According to the disk device, in the loading and unloading operations, the spherical projection provided to project toward the disk at one end of the suspension beyond the flexure mount position is brought into sliding contact with the slant surface of the slant base. Since the projection is located at the end of the suspension beyond the flexure mount position, it is possible to reduce a force for lifting the head slider in the unloading operation. Also, since the projection is spherical, the projection is brought into point contact with the slant surface to reduce a sliding area, suppress the contamination due to the sliding movement and make the sliding resistance stable. In addition, since the projection is spherical as mentioned above, the slant surface is brought into point contact with the projection, so that a strictly high positional precision for the slant base is not necessary. Furthermore, since the suspension is brought into engagement with the slant surface through the spherical projection, it is possible to keep the head slider supported by the suspension in parallel to the disk.

## BRIEF DESCRIPTION OF THE DRAWINGS

In the accompanying drawings:

Fig. 1 is a perspective view showing a structure according to a first embodiment of the invention which is applied to a magnetic hard disk drive;

Fig. 2 is a plan view showing one example of a structure of a rotary actuator assembly used in the embodiment shown in Fig. 1;

Fig. 3 is a side elevational view showing one example of a structure of the rotary actuator assembly used in the embodiment shown in Fig. 1;

Fig. 4 is an enlarged side elevational view showing a projection carrying plate of the rotary actuator assembly shown in Fig. 3;

Fig. 5 is an enlarged plan view showing the projection carrying plate of the rotary actuator assembly shown in Fig. 3;

Figs. 6A to 6F are side elevational views showing a series of operational states in the loading action in the embodiment shown in Fig. 1;

Figs. 7A to 7F are side elevational views showing a series of operational states in the unloading action in the embodiment shown in Fig. 1;

Fig. 8 is a side elevational view showing one example of a structure of a suspension, a flexure and a slider of the embodiment shown in Fig. 1;

Fig. 9 is a bottom view showing the example of the structure of the suspension, flexure and slider of the embodiment shown in Fig. 1;

Figs. 10A, 10B and 10C are a side elevational view, a plan view and a frontal view showing a detailed structure of the flexure shown in Fig. 8;

Figs. 11A, 11B and 11C are a side elevational view, a plan view and a frontal view showing a detailed structure of a conventional flexure;

Fig. 12 is a bottom view showing an angular relationship among the suspension, flexure and slider in the embodiment shown in Fig. 1;

Fig. 13 is a side elevational view showing a relationship between a leading end and a trailing end of the slider and the disk surface in the loading and unloading operation in the embodiment shown in Fig. 1;

Fig. 14 is a graph showing a change in output of an AE sensor fixed to a suspension when an angle between a slider mount surface of a flexure and the suspension, i.e., a slider mount pitch angle $\theta_p$ was changed;

Fig. 15 is a block diagram showing an example of an arrangement of a control system according to the embodiment shown in Fig. 1;

Fig. 16 is a graph showing an example of a disk rpm in the loading and unloading in the embodiment shown in Fig. 1;

Fig. 17 is a graph showing an example of an output of an AE sensor fixed to a suspension when an rpm of the disk was not lower than a flying minimum speed of a head slider but lower than a constant rpm and the loading action was carried out;

Fig. 18 is a graph showing an example of an output of the AE sensor fixed to the suspension when the rpm of the disk was not lower than the flying minimum speed of the head slider but lower than the constant rpm and the unloading action was carried out;

Fig. 19 is a graph showing an example of an output of an AE sensor fixed to a suspension when an rpm of the disk was kept at the normal constant rpm and the loading action was carried out;

Fig. 20 is a graph showing an example of an output of the AE sensor fixed to the suspension when the rpm of the disk was kept at the normal constant rpm and the unloading action was carried out;

Fig. 21 is a graph showing an example of an output of an AE sensor fixed to a suspension in a first conventional article when an rpm of the disk was kept at the normal constant rpm and the loading action was carried out;

Fig. 22 is a graph showing an example of an output of the AE sensor fixed to the suspension in the first conventional article when the rpm of the disk was kept at the normal constant rpm and the unloading action was carried out;

Fig. 23 is a graph showing an example of an output of an AE sensor fixed to a suspension in a second conventional article when an rpm of the disk was kept at the normal constant rpm and the loading action was carried out;

Fig. 24 is a graph showing an example of an output of the AE sensor fixed to the suspension in the second conventional article when the rpm of the disk was kept at the normal constant rpm and the unloading action was carried out;

Figs. 25A to 25E are graphs showing examples of an output of an AE sensor fixed to a suspension when the head loading speed in the direction perpendicular to the disk surface was changed while kept the head pitch angle at +0.135°;

Figs. 26A to 26E are graphs showing examples of an output of an AE sensor fixed to a suspension when the head loading speed in the direction perpendicular to the disk surface was changed while kept the head pitch angle at +0.235°;

Fig. 27 is a graph showing a preferable range for the head loading speed in the direction perpendicular to the disk surface;

Fig. 28 is a graph showing a preferable range for the head unloading speed in the direction perpendicular to the disk surface;

Fig. 29 is a bottom view showing a structure of a suspension, a flexure and a slider in accordance with a second embodiment of the invention which is applied to a magnetic disk drive;

Fig. 30 is a side elevational view showing the structure of the suspension, the flexure and the slider in accordance with the second embodiment of the invention which is applied to the magnetic disk drive;

Fig. 31 is a longitudinal section view showing the suspension, flexure and slider shown in Figs. 29 and 30;

Fig. 32 is a fragmentary longitudinal sectional view showing a detail of the flexure shown in Fig. 31;

Fig. 33 is a cross-sectional view taken along the line B-B of Fig. 29;

Fig. 34 is a bottom view showing a structure of a suspension and a flexure in accordance with a third embodiment of the invention which is applied to a magnetic disk drive;

Fig. 35 is a side elevational view showing the structure of the suspension and the flexure in accordance with the third embodiment of the invention which is applied to the magnetic disk drive;

Fig. 36 is a cross-sectional view taken along the line F-F of Fig. 34;

Fig. 37 is a bottom view showing a detail of the flexure shown in Fig. 34;

Fig. 38 is a longitudinal view taken along the line G-G of Fig. 37;

Fig. 39 is a longitudinal view showing a state of the suspension, flexure and slider in unloading in the third embodiment of the invention;

Fig. 40 is a longitudinal view showing a state of the suspension, flexure and slider in loading in the third embodiment of the invention; and

Fig. 41 is a side elevational view showing a relationship between a leading end and a trailing end of a slider and the disk surface in loading and unloading according to the prior art.

## DESCRIPTION OF THE PREFERRED EMBODIMENTS

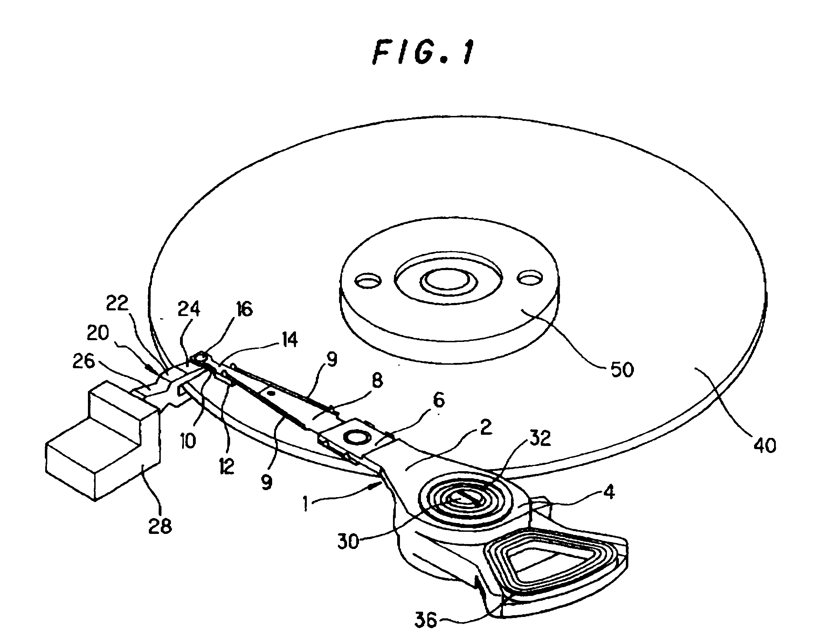

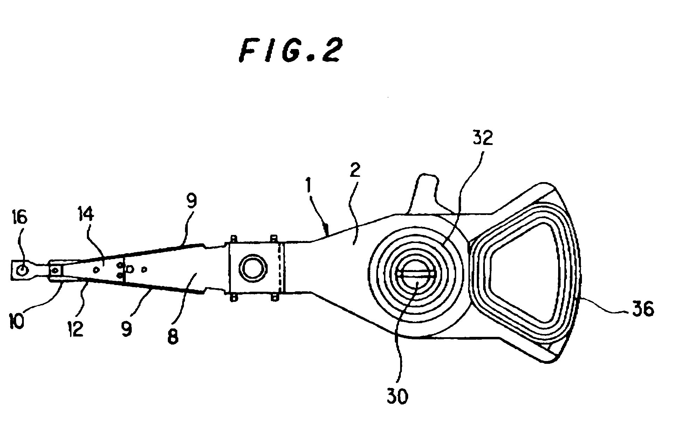

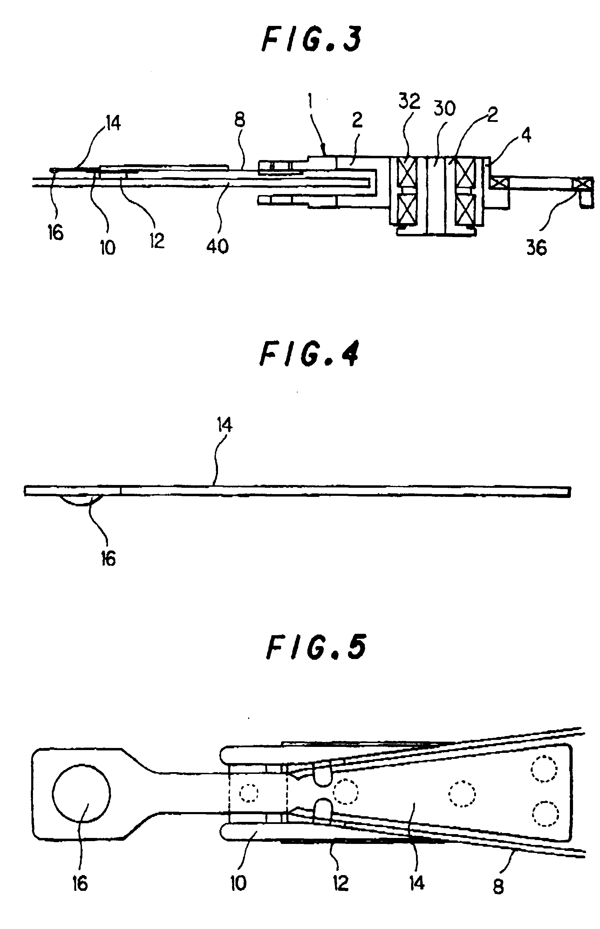

Fig. 1 shows a structure in which the present invention is applied to a magnetic hard disk drive. Figs. 2 and 3 are a plan view and a side elevational view of an example of a rotary actuator assembly used in the embodiment shown in Fig. 1. A rigid arm 2 of the rotary actuator assembly 1 is made of, for example, aluminum by die-casting. On end of a suspension 8 made of, for example, stainless steel is fixed to a mount region 6 of the rigid arm 2. A pair of flanges 9 are formed at predetermined regions on both sides of the suspension 8. The part of the suspension 8 where the flanges 9 are formed is referred to by a load beam portion, and the other part where the flanges 9 are not formed is referred to by a spring portion. A head slider 12 including a magnetic head is mounted through a flexure 10 on the side of the magnetic hard disk 40 in the vicinity of the other end of the suspension 8.

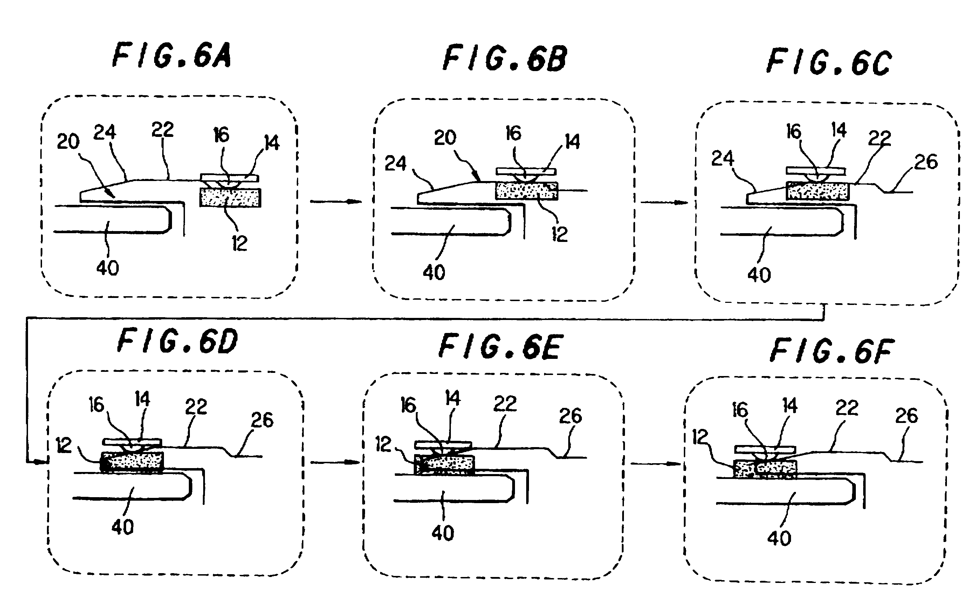

A projection carrying plate 14 is fixed to the opposite side of the magnetic hard disk 40 of the suspension 8. A spherical projection 16 that projects toward the disc 40 is formed at the end portion by the formation of a dimple as shown in Figs. 4 and 5. The spherical projection 16 is provided at a predetermined position on a longitudinal centerline of the carrying plate 14. The carrying plate 14 is fixed by welding or the like (for example, welds at positions indicated by dotted circles in Fig. 5) so that its longitudinal centerline is aligned with a longitudinal centerline of the suspension 8 and the spherical projection 16 is located further from the suspension 8 than the head slider 12.

A hub portion 4 of the rigid arm 2 of the rotary actuator assembly 1 is coupled rotatably with the fixed shaft 30 through a bearing 32. A VCM (Voice Coil Motor) 36 is provided on a portion which is formed integrally with the hub portion 4 of the rigid arm 2 and which extends opposite the suspension 8 with respect to the fixed shaft 30. The drive force of the VCM 36 causes the arm 2 to rotate about the centerline of the fixed shaft 30 to thereby the head slider 12 at a predetermined position of the magnetic hard disk 40.

A slant base 20 is provided in the vicinity of an outer circumference of the disk 40 and includes a slant surface 24 which is separated away from the surface of the disk 40 in accordance with a radial outward distance of the disk 40, a flat surface 22 which is parallel to the surface of the disk 40 contiguous with the slant surface 24, and a parking recess 26 which is contiguous with the flat surface 22 for defining a lock position of the rotary actuator assembly 1. A height of the recess 26 of the slant base 22 is determined so that a height of the head slider 12 when the projection 16 is positioned in the recess 26 is equal to a height of the head slider 12 when the head slider 12 effects a write/read operation to the disk 40. The slant base 20 is supported by a slant base support member 28 which in turn is fixed to a housing base (not shown).

Figs. 6A to 6B show a series of loading operation according to the embodiment. First of all, as shown in Fig. 6A, the projection 16 is located in the recess 26 of the slant base 20 and is locked therein (i.e., the projection is positioned in a stay position). At this time, the height of the head slider 12 is equal to that of the head slider 12 when the latter effects the write/read operation to the disk 40. Subsequently, as shown in Fig. 6B, the VCM 36 causes the rigid arm 2 and the suspension 8 to move inwardly of the disk 40 to thereby move the projection 16 from the recess 26 to the flat surface 22. In this case, a lift-up amount of the head slider 12 from the disk 40 is 200μm. As shown in Fig. 6C, when the projection 16 reaches a load starting position which is a terminal position of the flat surface 22, the VCM 36 has once stopped. Subsequently, the VCM causes the projection 16 to move along the slant surface 24 (see Fig. 6D). Then, as shown in Fig. 6E, the VCM 36 holds the projection 16 on the slant surface 24 until the head slider 12 is subjected to the aerial film pressure from the disk 40. When the head slider 12 is subjected to the aerial film pressure from the disk 40, the VCM 36 causes the projection 16 to move radially inwardly of the disk 40 (see Fig. 6F). Thus, the head slider 12 may be lifted to effect the write/read operation to the disk 40. As described above, the height of the head slider 12 relative to the disk 40 in the stay position shown in Fig. 6A, i.e., in the lock position is equal to the height of the head slider 12 which has been lifted relative to the disk 40 for effecting the writing/reading as shown in Fig. 6F. Accordingly, there is no loading loss.

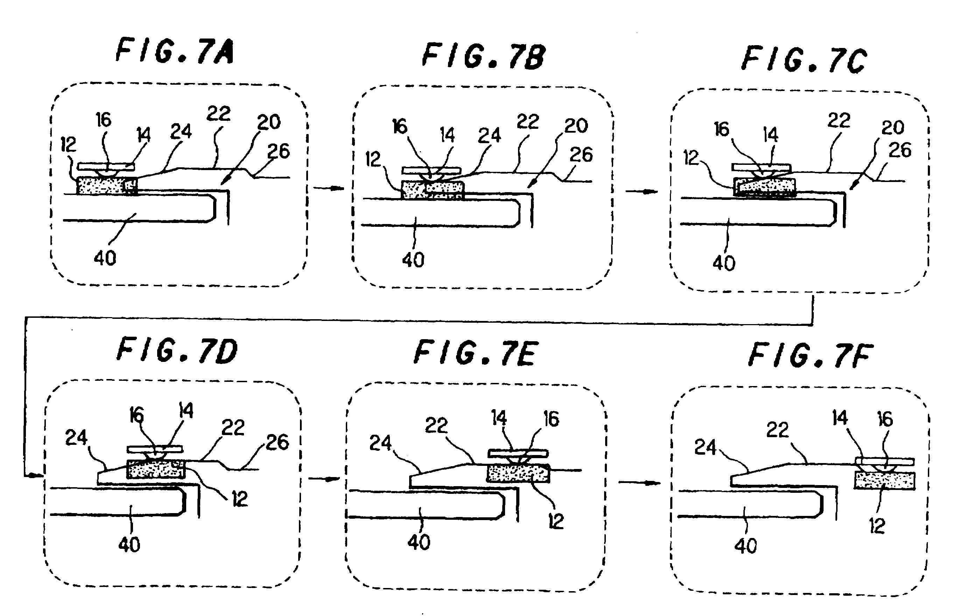

Figs. 7A to 7F show a series of unloading operation according to the embodiment. First of all, as shown in Fig. 7A, the VCM 36 causes the suspension 8 (hence, the projection 16 and the head slider 12) to stop at a standby position prior to the slant base 20 on the disk 40. Subsequently, as shown in Fig. 7B, the VCM 36 causes the suspension 8 to moved to the outer periphery of the disk 40 to thereby engage the projection 16 with the end portion of the slant surface 24. The position at this time is an unload start position. Next, the VCM 36 causes the suspension 8 to further move to the outer periphery of the disk 40, whereby the projection 16 is moved on the slant surface 24 (see Fig. 7C), is moved along the flat surface 22 (see Fig. 7D), is out of the region of the disk 40 (see Fig. 7E), reaches the recess 26 (i.e., in the stay position) and is locked in the recess 26 (see Fig. 7F). As described above, the height of the head slider 12 40 in the standby position shown in Fig. 7A (i. e., the height of the head slider 12 which has been lifted up to effect the writing/reading operation to the disk 40) is equal to the height of the head slider 12 in the stay position, i.e., the lock position as shown in Fig. 7F. Accordingly, there is no loading loss.

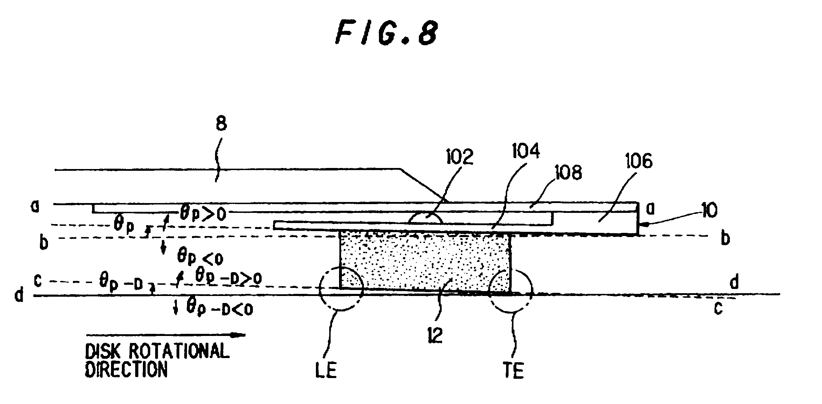

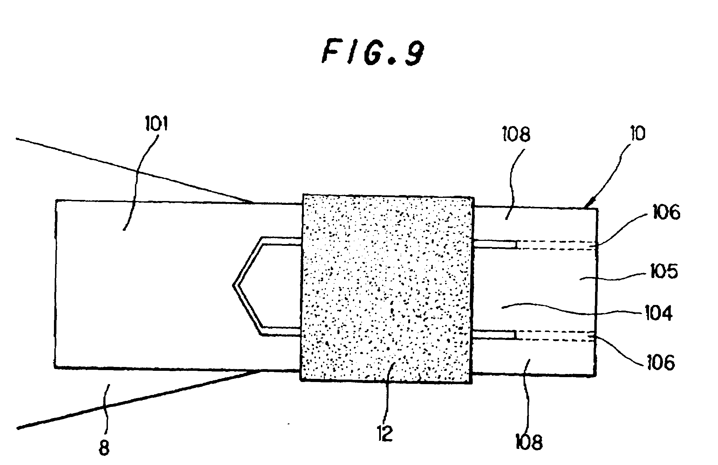

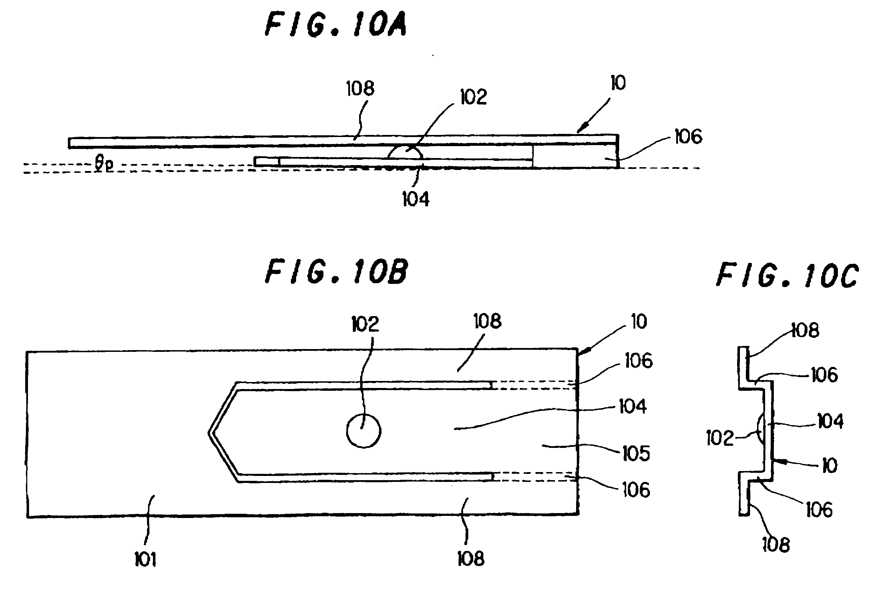

Figs. 8 and 9 are a side elevational view and a bottom view showing an example of the suspension, the flexure and the slider according to the embodiment shown in Fig. 1. Figs. 10A, 10B and 10C are a side elevational view, a plan view and a frontal view showing a detail of the flexure shown in Fig. 8. The flexure 10 includes a fastening portion 101 fixed to the suspension 8, a tongue portion 104 having a longitudinal centerline aligned with the longitudinal centerline of the suspension 8 and having a surface on the side of the disk 40 on which surface the head slider 12 is mounted, a pair of thin flexible outer fingers 108 extending in parallel to the tongue portion 16 from the fastening portion 101, and a coupling portion 105 for coupling the tongue portion 104 and the fingers 108 through stepped portions 106. Due to the existence of the stepped portions 106, the tongue portion 104 is closer to the disk 40 than the fingers 108. A spherical projection 102 which constitutes a load receiving point for receiving a load from the suspension 8 is formed on a surface of the tongue 104 opposite the disk 40.

The head slider mounting surface of the flexure 10, i.e., the tongue portion 104 has an angle θp so that a spaced distance of the leading end LE of the head slider 12 to the disk 40 is longer than a spaced distance of the trailing end TE of the head slider 12 to the disk 40. Namely, the tongue portion 104 has a positive mount pitch angle θp relative to the fingers 108. Thus, in order to form such a positive pitch angle θp, it is sufficient to make the angle θp on both the convex and concave pressing dies for the stepped portions 106.

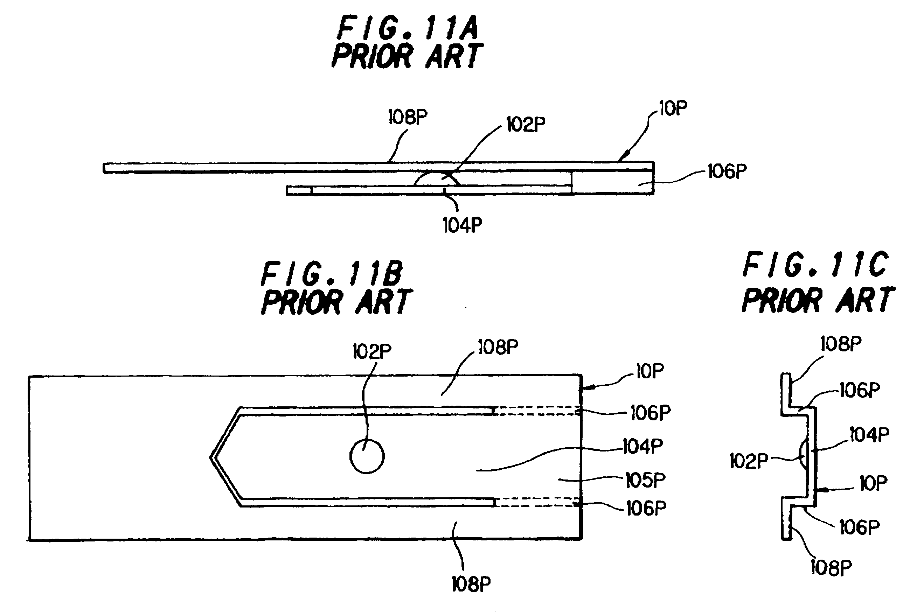

Figs. 11A, 11B and 11C are a side elevational view, a plan view and a frontal view showing a detail of the conventional flexure. In Figs. 11A to 11C, the same numerals with a character P are used to indicate the same or like components as those of the flexure according to the present invention shown in Figs. 11A to 11C. As shown in Figs. 11A to 11C, the tongue portion 104P of the conventional flexure 10P has no angle θp relative to the fingers 108P.

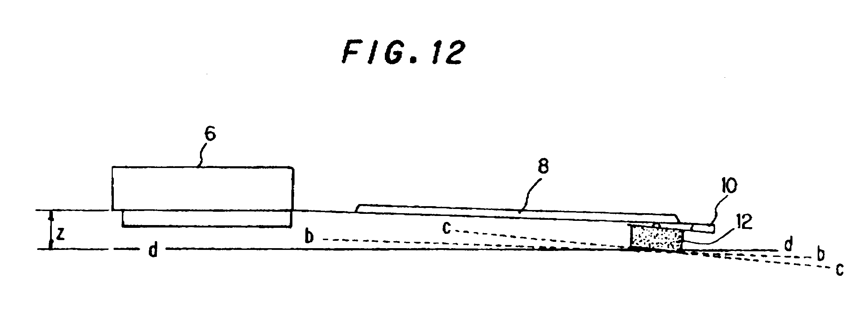

Fig. 12 shows a relationship between the leading end LE and the trailing end TE of the slider 12 and the disk surface in the loading operation and the unloading operation according to the embodiment shown in Fig. 1. Assuming that z is the head mount height (i.e., the height of the arm mount region 6, b-b is the line which is parallel with the suspension 8, c-c is the line which is parallel with the surface of the slider 12, i.e., the tongue 104 of the flexure 10, and d-d is the line representing the disk surface, the pitch angle θp is an angle defined by the line c-c and the line b-b. Assuming that θz-D is the angle defined by the lines b-b and d-d, i.e., the angle defined by the suspension 8 and the disk surface, the angle (θp-D) defined by the slider 12 and the disk surface is given as follows:

$$(θp-D)=θp+(θz-D)$$

By mounting the suspension 8 at the height z so as to meet the condition, θp+(θz-D)>0, it is possible to meet the relationship, (θp-D)>0.

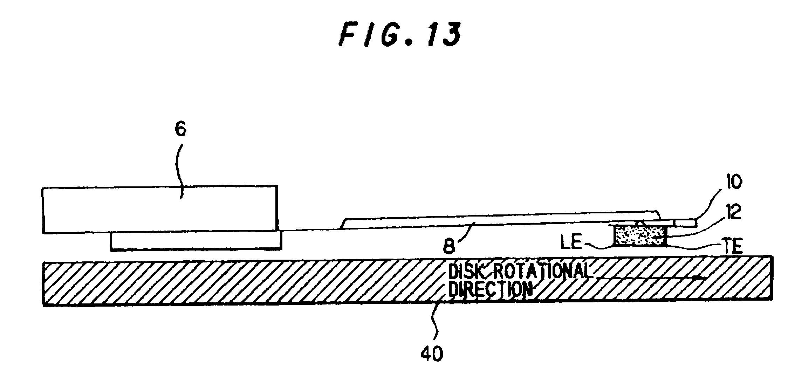

Fig. 13 shows a relationship between the leading end LE and the trailing end TE of the slider 12 and the disk surface in the loading operation and the unloading operation according to the embodiment shown in Fig. 1. As described above, by meeting the conditions θp>0 and ( θp- D)>0 , in the loading operation and the unloading operation, the leading end LE of the head slider 12 is always is much further spaced from the disk 40 than the trailing end TE. Accordingly, a dynamic pressure due to an aerial film between the slider 12 and the disk 40 is likely to occur, and hence, a lifting force occur at the position where the slider 12 is located at a relatively high level. Thus, the slider 12 is not brought into contact with the disk 40, and the loading and unloading operation is well performed.

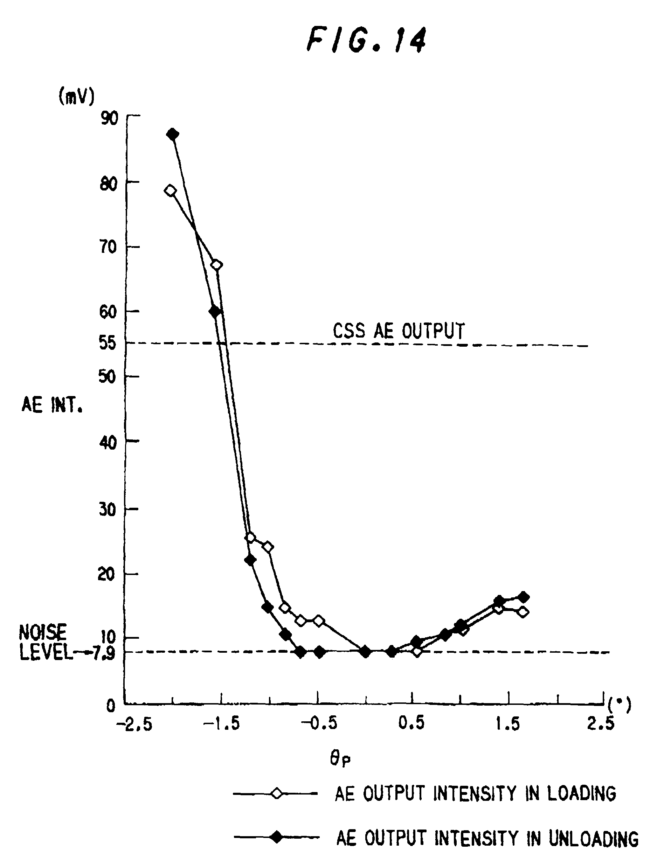

Fig. 14 is a graph showing a change in an AE (acoustic emission) sensor fixed to the suspension 8 in the loading and the unloading in the case where the angle defined between the slider mount surface of the flexure and the suspension 8, i.e., the mount pitch angle $\theta p$ is changed. The graph shows that the larger the AE intensity, the larger the collision energy will become. As is apparent from Fig. 14, it is preferable that the head slider mount surface of the flexure 10, i.e., the angle of the tongue 104 be about 0.3 degrees. Incidentally, the output of the AE sensor in case of the CSS system is about 55mV.

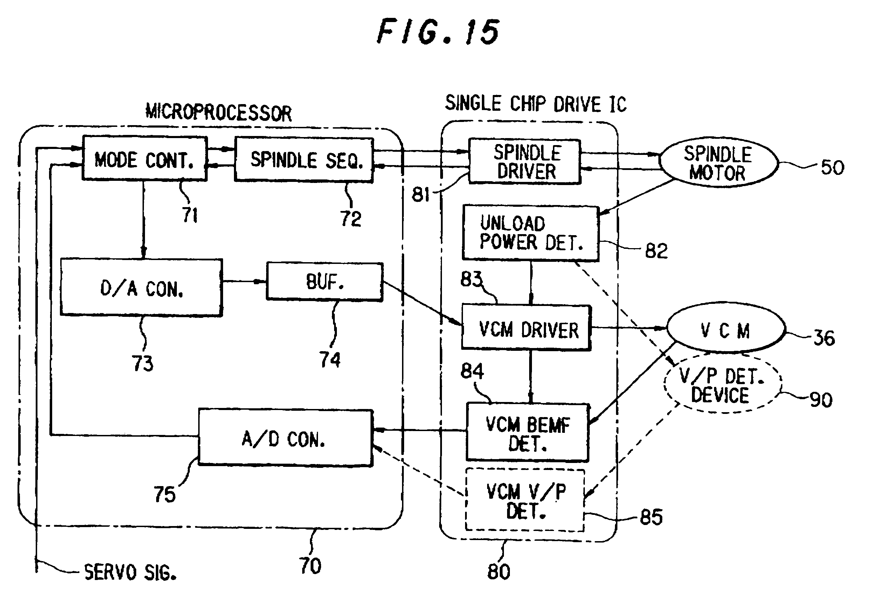

Fig. 15 is an example of a control system for controlling the mechanical driver used in the embodiment shown in Fig. 1. The controlling system includes a microprocessor 70 and a chip drive IC 80. The microprocessor 70 is provided with a mode controller 71, a spindle sequencer 72, a D/A converter 73, a buffer 74 and an A/D converter 75. A single chip drive IC 80 is provided with a spindle driver 81, an unload power detector 82, a VCM driver 83, a VCM-BEMF detector 84 and a VCM velocity/position detector 85. The VCM velocity/position detector 85 corresponds to a velocity/position detecting device 90 provided exclusively for detecting the position and the velocity of the VCM 36. The VCM velocity/position detector 85 and the velocity/position detecting device 90 are provided for the purpose of performing super-low speed control of the VCM 36.

The mode controller 71 receives a servo signal and an output signal of the spindle sequencer 72 and the A/D converter 75 to control the operational modes of the VCM 36 and at the same time to control of modes such as a rotational stop/start of a spindle motor 50 for drivingly rotating the disk 40 and an on/off operation of the spindle servo. The spindle sequencer 72 receives an output signal of the mode controller 71 and the a feedback signal from the spindle driver 81 to select the rotational speed of the spindle motor 50 and to output an output signal representative of the rotational speed.

The spindle driver 81 receives the velocity signal from the spindle sequencer 72 to drive the spindle motor 50. In this example, the spindle motor 50 is of a three-phase full wave sensorless type and is not provided with a position detecting element such as a Hall element. The unload power detector 82 rectifies the reverse electromotive force of the spindle motor 50 in the off-state of the power source and supplies the VCM driver 83 and the velocity/position detecting device 90 with it.

The D/A converter 73 converts a digital signal outputted from the mode controller 71 into an analog signal. The buffer 74 is a prepositioned amplifier for inputting the output signal of the D/A converter 73 into the VCM driver 83. The driver 83 receives the output signal of the buffer 74 to drive the VCM 36.

The BEMF detector 84 outputs an analog signal representative of the position and the velocity of the VCM 36, from a reverse emf signal from the coil of the VCM 36 and the output signal of the VCM driver 83. The A/D converter 75 converts an analog signal outputted from the BEMF detector 84 or VCM velocity/position detector 85 into a digital signal to output it to the mode controller 71.

When data are written or read relative to the disk 40 under the normal use condition of the controlling system shown in Fig. 15, i.e., by the head, the VCM 36 is controlled through the mode controller 71, the D/A converter 73, the buffer 74 and the VCM driver 83 in accordance with the servo signal inputted into the microprocessor 70, and the spindle motor 50 is controlled through the mode controller 71, the spindle sequencer 72 and the spindle driver 81.

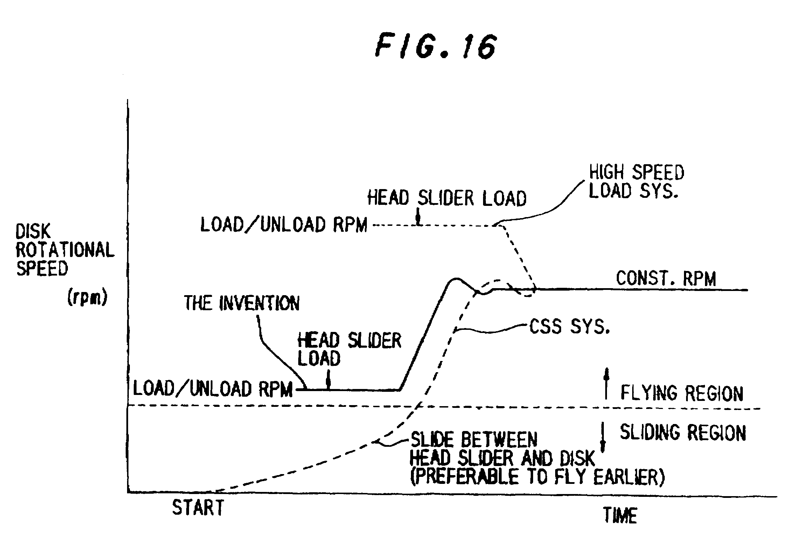

Fig. 16 shows an example of the disk rpm in the loading and unloading in the embodiment shown in Fig. 1. As shown in Fig. 16, the spindle sequencer 72 and the spindle driver 81 shown in Fig. 15 control the spindle motor 50 so that the rpm of the disk 40 exceeds a flying minimum velocity of the head slider 12 in the loading/unloading operation and is at the same time smaller than a normal constant rpm.

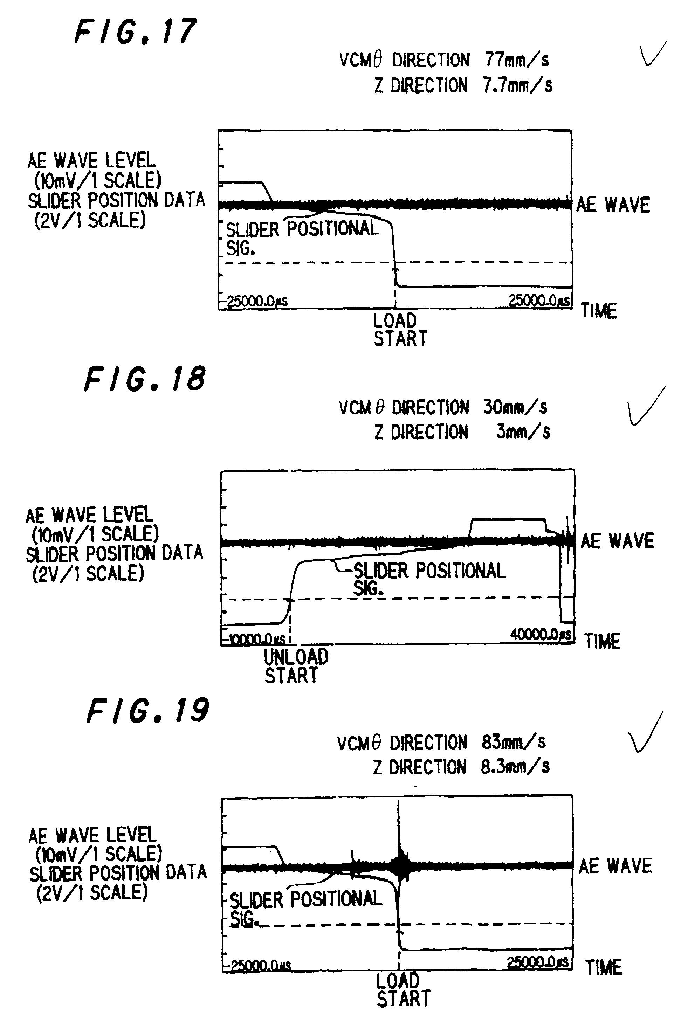

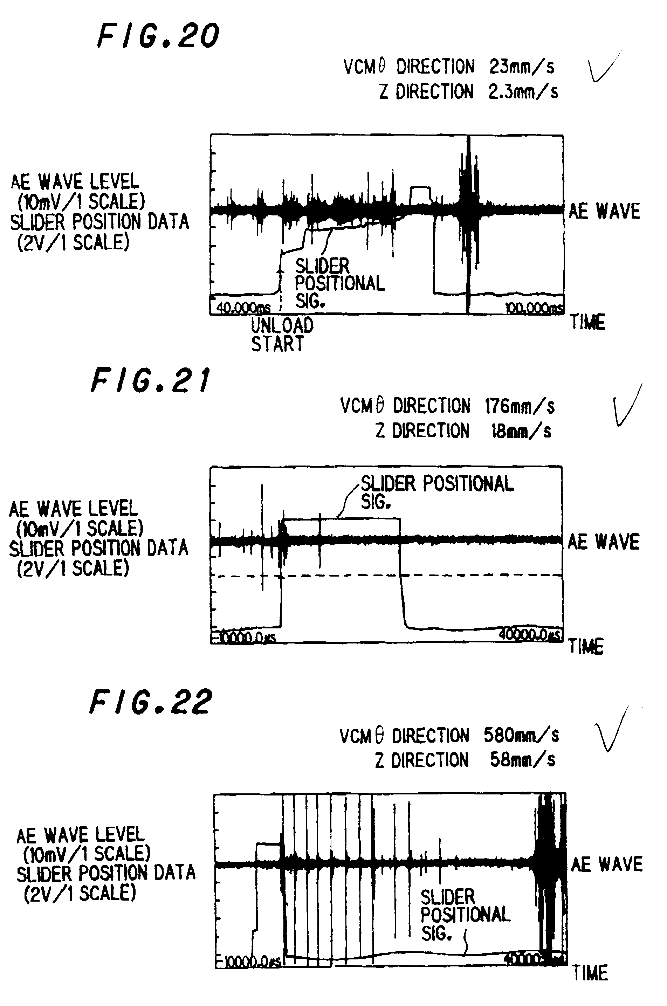

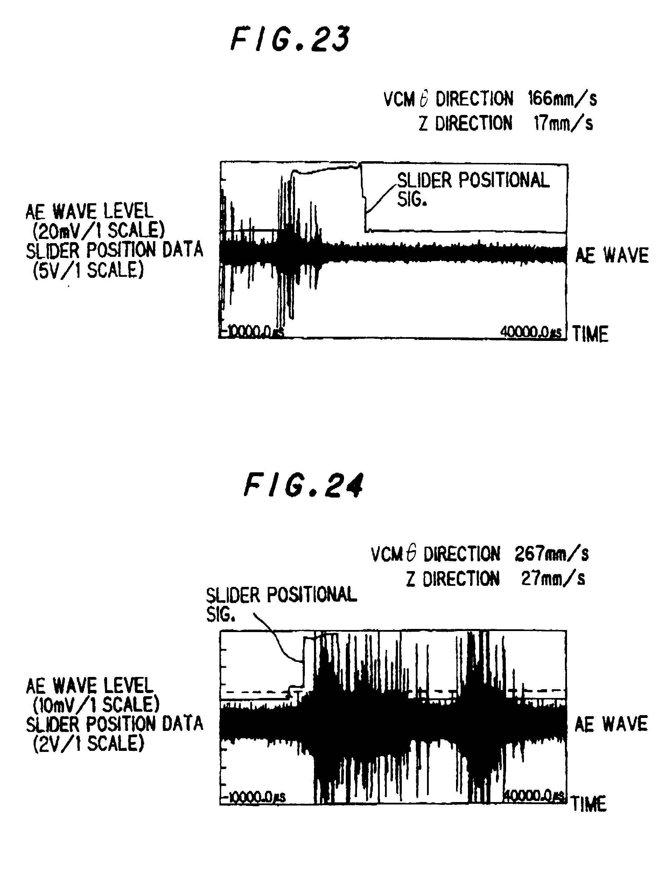

Fig. 17 shows an example of the output of the AE sensor fixed to the suspension 8 in the case where the rpm of the disk 40 exceeded the flying minimum velocity of the head slider 12 and was smaller than the constant rpm and the loading was carried out. Fig. 18 shows an example of the output of the AE sensor fixed to the suspension 8 in the case where the rpm of the disk 40 exceeded the flying minimum velocity of the head slider 12 and was smaller than the constant rpm and the unloading was carried our. Fig. 19 shows an example of the output of the AE sensor fixed to the suspension 8 in the case where the rpm of the disk 40 was kept at the constant rpm and the loading was carried out. Fig. 20 shows an example of the output of the AE sensor fixed to the suspension 8 in the case where the rpm of the disk 40 was kept at the constant rpm and the unloading was carried out. Fig. 21 shows an example of the output of the AE sensor fixed to a suspension in a first conventional article in the case where the rpm of the disk was kept at the constant rpm and the loading was carried out. Fig. 22 shows an example of the output of the AE sensor fixed to the suspension in the first conventional article in the case where the rpm of the disk was kept at the constant rpm and the unloading was carried out. Fig. 23 shows an example of the output of the AE sensor fixed to a suspension in a second conventional article in the case where the rpm of the disk was kept at the constant rpm and the loading was carried out. Fig. 24 shows an example of the output of the AE sensor fixed to the suspension in the second conventional article in the case where the rpm of the disk was kept at the constant rpm and the unloading was carried out. In these figures, a VCMθ direction means a radial direction of the disk, and a Z-direction means a direction perpendicular to the disk surface.

As is apparent from Figs. 17 through 24, if the rotational speed (rpm) of the disk 40 is kept at a level not lower than the flying minimum velocity of the head slider 12 but lower than the constant rpm, the AE wave level, i.e., collision energy becomes small. Thus, the following advantages may be insured.

(a) Even if a roll angle or a pitch angle is generated, or even if the posture of the head slider 12 is improper, it is possible to suppress the collision energy between the head slider 12 and the disk 40 at a minimum possible level.

(b) Even if the posture of the head slider 12 would be improper due to the manufacture allowance or assembling allowance of mechanical parts, it is possible to suppress the collision energy between the head slider 12 and the disk 40 at a minimum possible level.

(c) Even if the posture of the head slider 12 would be improper due to the external vibration or collision, it is possible to suppress the collision energy between the head slider 12 and the disk 40 at a minimum possible level.

(d) Unless the posture of the head slider 12 is improper, the collision energy between the head slider 12 and the disk 40 becomes zero.

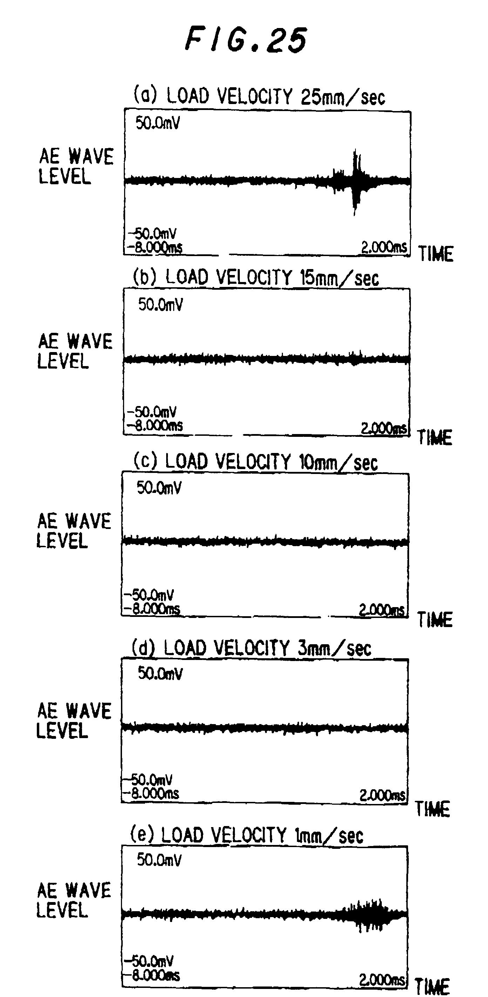

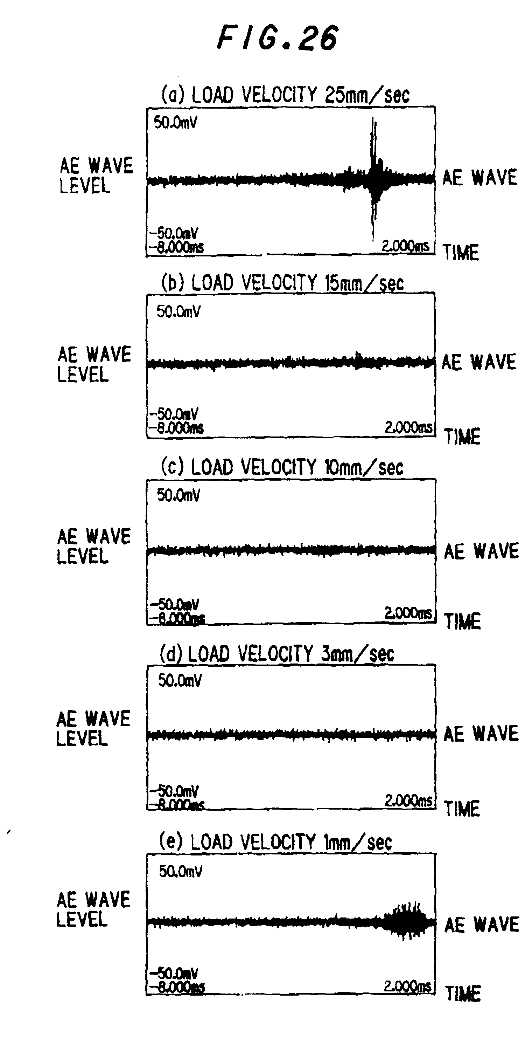

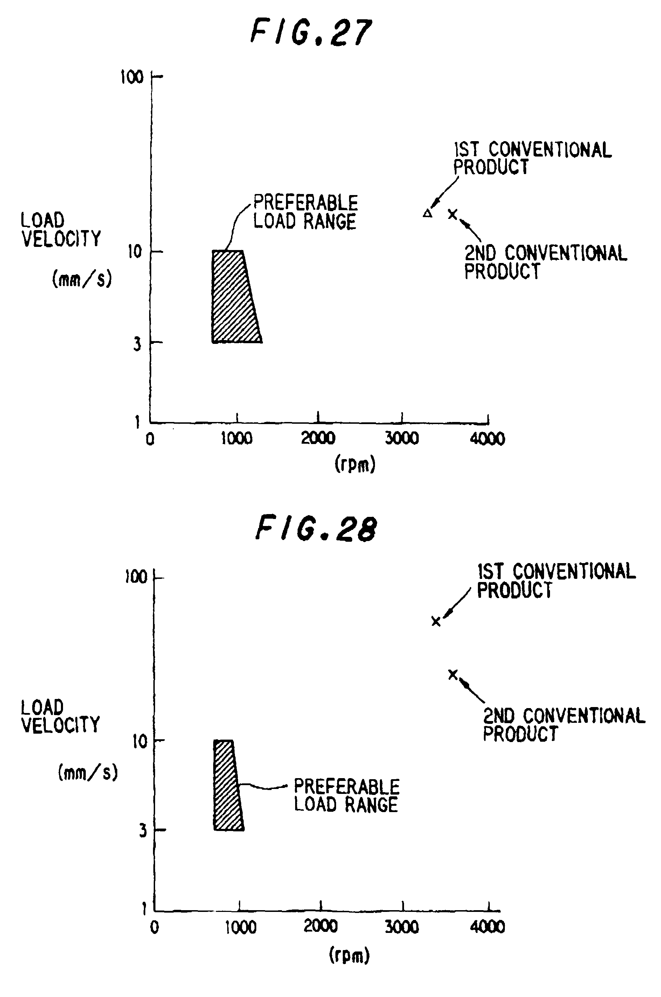

Figs. 25A to 25E show examples of outputs of the AE sensor fixed to the suspension in the case where the head loading speed in the direction perpendicular to the disk surface was changed while keeping the head pitch angle at +0.135°, and Figs. 26A to 26E show examples of outputs of the AE sensor fixed to the suspension in the case where the head loading speed in the direction perpendicular to the disk surface was changed while keeping the head pitch angle at +0.235°. From the experimental results shown in Figs. 25 and 26, the preferable range of the head loading speed in the direction perpendicular to the disk surface is not higher than 10mm/sec but not lower than 3mm/sec as shown in Fig. 27. Also, the preferable range of the head unloading speed in the direction perpendicular to the disk surface is not higher than 10mm/sec but not lower than 3mm/sec as shown in Fig. 28.

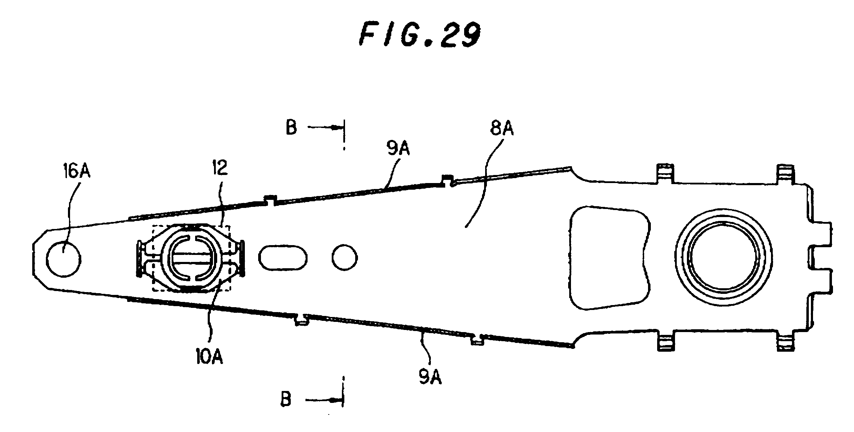

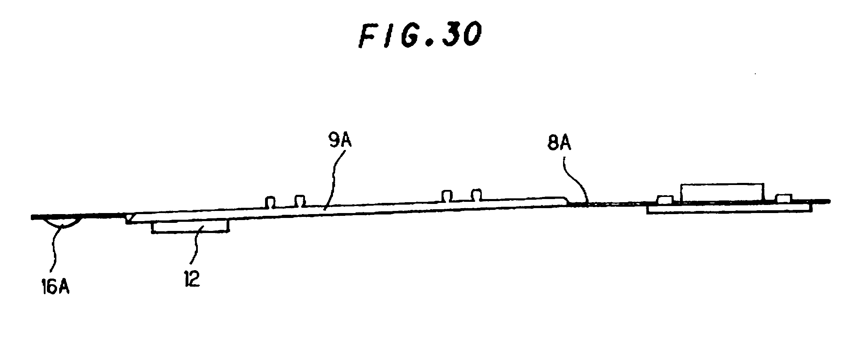

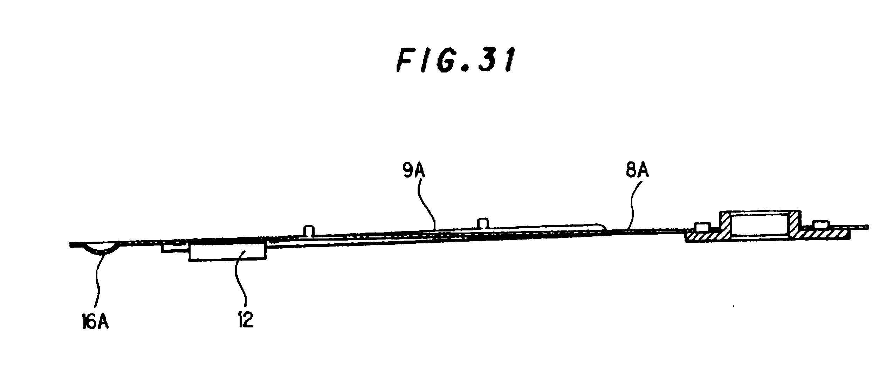

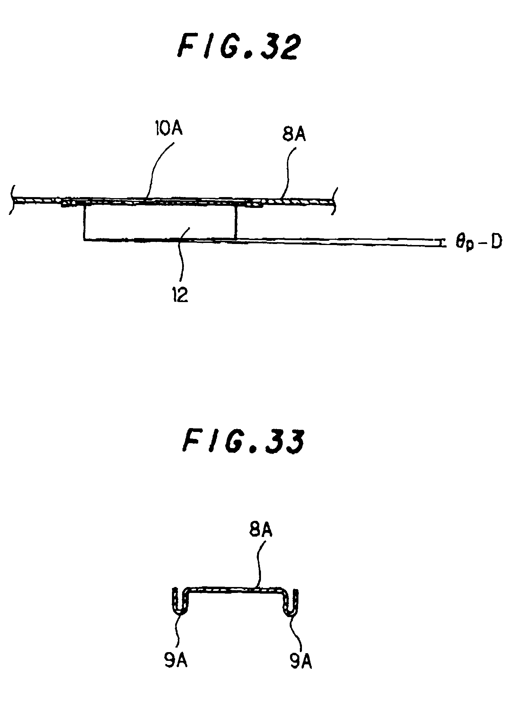

Figs. 29 and 30 are a bottom view and a side elevational view showing a structure of a suspension, a flexure and slider in accordance with a second embodiment of the invention which is applied to a magnetic hard disk drive. Fig. 31 is a longitudinal sectional view showing the suspension, flexure and the slider shown in Figs. 29 and 30. Fig. 32 is a fragmentary sectional view showing a detail of the flexure shown in Fig. 31. Fig. 33 is a cross-sectional view taken along the line B-B of Fig. 29. Direct distinctions between the second embodiment shown in these figures and the first embodiment shown in Figs. 1 to 5 are that in the second embodiment, a spherical projection 16A projecting toward the disk surface is directly formed on a suspension 8A, a flexure 10A is of a so-called round type, and flanges 9A formed on both sides of the suspension 8A have fold-back portions.

The flexure 10A is fixed to the suspension 8A so as to meet the relationship, θp>0. Accordingly, in the same manner as in the case shown in Fig. 8, the angle of the surface of the slider 12 to be mounted on the flexure 10A also meet the relationship, θp>0 and the angle between the surface of the slider 12 and the disk surface meets the relationship,(θp-D)>0 . Accordingly, in the same manner as in the case shown in Fig. 8, the loading and unloading can be carried out without any contact between the slider 12 and the disk. Incidentally, the angle of the flexure 10A relative to the suspension 8A, i. e., the mount pitch angle θp of the head slider 12 is preferably approximately 0.3 degrees in the same manner as in Fig. 8.

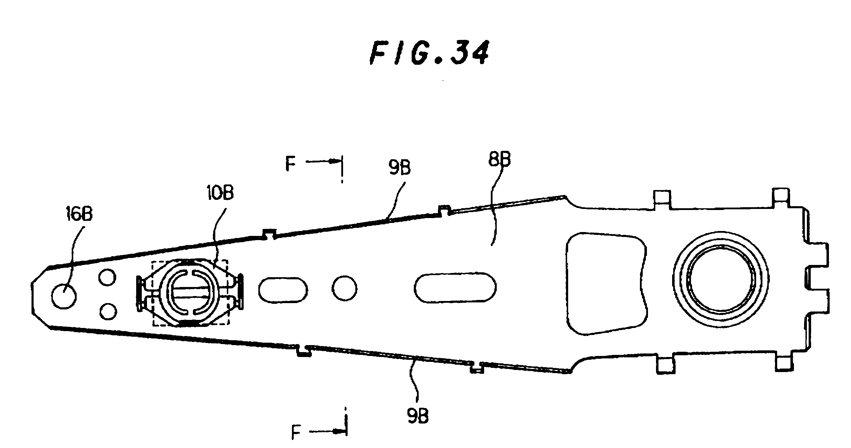

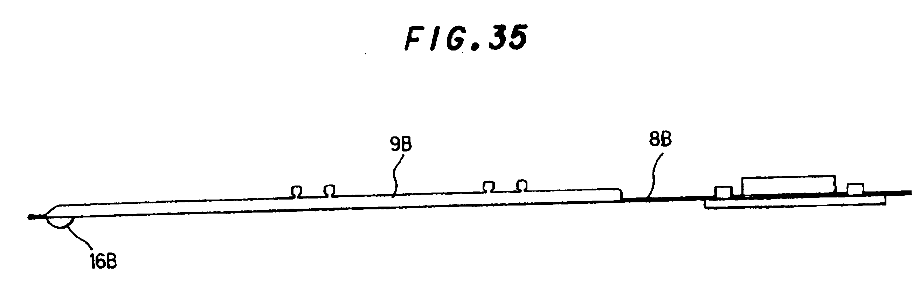

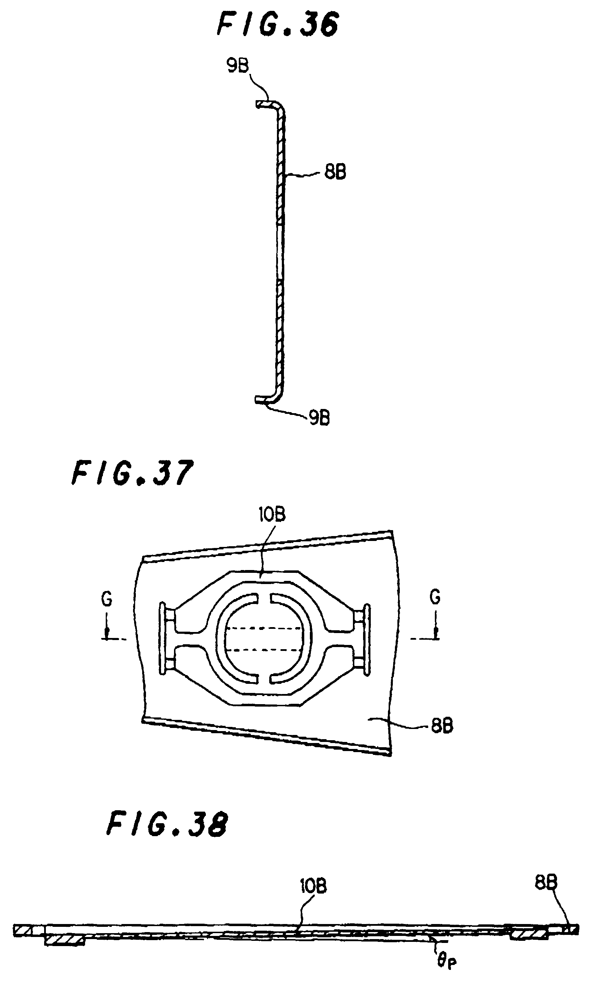

Figs. 34 and 35 are a bottom view and a side elevational view showing a structure of a suspension and a flexure in accordance with a third embodiment of the invention which is applied to a magnetic hard disk drive. Fig. 36 is a cross-sectional view taken along the line F-F of Fig. 34. Fig. 37 is a bottom view showing a detail of the flexure shown in Fig. 34. Fig. 38 is a sectional view taken along the line G-G of Fig. 37. In the third embodiment, the spherical projection 16B projecting toward the disk surface is directly formed on the suspension 8B in the same manner as in the second embodiment shown in Figs. 29 to 33 and the flexure 10B is of the so-called round type. A distinction between the second embodiment and the third embodiment is that the flanges 9B formed on both sides of the suspension 8B has no fold-back portions.

The flexure 10B is fixed to the suspension 8B so as to meet the relationship, θp>0. Accordingly, in the same manner as in the second embodiment, the angle of the surface of the slider 12 to be mounted on the flexure 10B also meet the relationship, θp>0. Incidentally, the angle of the flexure 10B relative to the suspension 8B, i.e., the mount pitch angle θp of the head slider 12 is preferably approximately 0.3 degrees in the same manner as in the second embodiment.

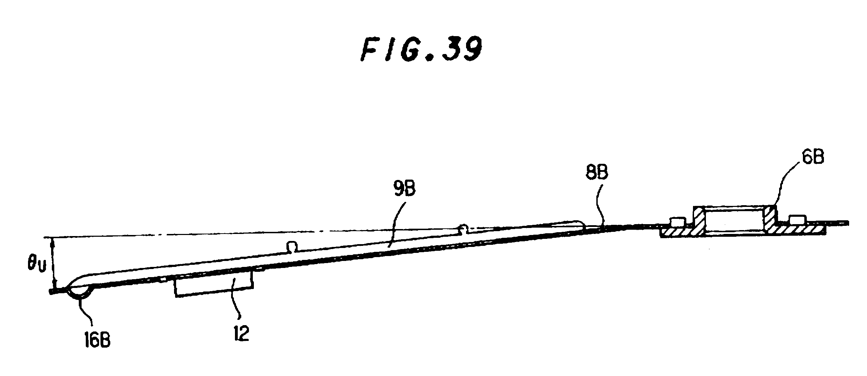

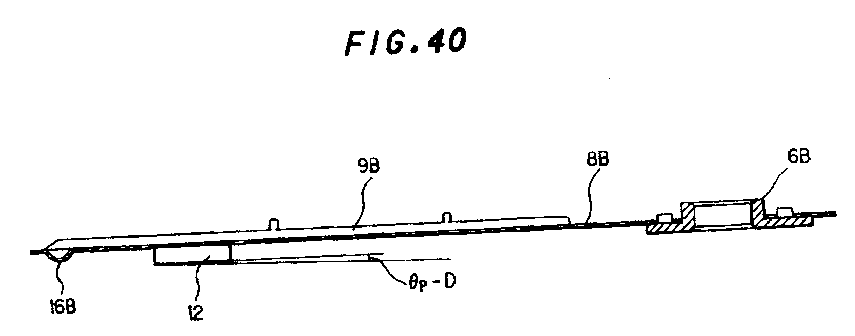

Fig. 39 is a longitudinal sectional view showing a state of the suspension, the flexure and the slider in the unloading according to the third embodiment of the invention, and Fig. 40 is a longitudinal sectional view showing a state of the suspension, the flexure and the slider in the loading according to the third embodiment of the invention. As shown in Fig. 40, the angle between the surface of the slider 12 and the disk surface meets the relationship,(θp-D)>0 . Accordingly, the loading and unloading can be carried out without any contact between the slider 12 and the disk.

In the foregoing embodiments, the arm which supports the head is arranged above the magnetic disk but the present invention is not limited thereto. The invention may be applied to the case where the arm is arranged below the magnetic disk.

Also, the present invention is not limited to the application where a single magnetic disk is used. It is apparent for those skilled in the art to apply the invention to the case where a plurality of magnetic disks are used.

Furthermore, the present invention is not limited to the magnetic disk and may be applied to an optical disk or a magnetoptical disk.

In the disk device according to the invention, since the projection which is engaged with the slant surface of the slant base in the loading and unloading arranged at the end portion beyond the flexure mount position of the suspension, it is possible to reduce the force for lifting the head slider during the unloading operation. Also, since the projection has a spherical surface, the projection may come into point contact with the slant surface to thereby decrease the sliding area, suppress the contamination due to the sliding movement and make the sliding resistance stable. Also, since the projection is in point contact with the slant surface, it is unnecessary to strictly enhance the arrangement precision. Furthermore, since the suspension is engaged with the slant surface through the spherical projection, the suspension may take a rolling motion about the spherical projection. As a result, the posture of the head slider supported by the suspension may be keep in parallel.

## Claims

1.  A disk device for moving an arm (2) which supports a head slider (12) and for positioning said head slider (12) at a predetermined position of a disk (40), comprising:

    a suspension (8) fixed at one end to said arm (2);
    a flexure (10) which is provided in the vicinity of the other end of said suspension (8) and on which said head slider (12) is mounted;
    a slant base (20) provided with a slant surface (24) having an increasing distance from said disk (40) in accordance with a radial outward distance of said disk (40);

    characterized by a spherical projection (16) by the formation of a dimple provided to project toward said disk (40) at the end beyond the flexure mount position of said suspension (8); and
    a drive means (36) for moving said arm (2) so that said projection (16) is moved in a sliding point contact with said slant surface (24) in loading and unloading operation.

2.  The disk device according to claim 1, wherein said projection is formed on a projection (16) carrying plate (14) which is discrete from said suspension (8), said projection carrying plate (14) being fixed to said suspension (8).

3.  The disk device according to claim 1, wherein said projection (16) is formed integrally with said suspension (8).

4.  The disk device according to claim 3, wherein said suspension (8) has flanges (9) at its periphery, and a flat region, provided with no flanges, between said flexure (10) and said spherical projection (16).

5.  The suspension (8) according to one of the claims 1 to 4, wherein an angle for the head slider mount surface of said flexure region is selected so that a spaced distance of a leading end (LE) of said head slider (12) relative to said disk (40) is longer than a spaced distance of a trailing end (TE) of said head slider (12) relative to said disk (40).

6.  The suspension (8) according to claim 5, wherein the angle for said head slider mount surface of said flexure region is approximately 0.3 degrees.

## Patentansprüche

1.  Plattengerät zum Bewegen eines Arms (2), der einen Kopfverschieber (12) trägt, und zum Positionieren des Kopfverschiebers (12) in einer vorbestimmten Position einer Platte (40), das umfasst:

    eine Aufhängung (8), die an einem Ende an dem Arm (2) befestigt ist,
    ein Flexionsteil (10), das in der Nähe des anderen En-des der Aufhängung (8) vorgesehen ist und auf dem der Kopfverschieber (12) montiert ist,
    ein Abschrägungsbasisteil (20), das mit einer abgeschrägten Oberfläche (24) versehen ist, die einen zunehmenden Abstand von der Platte (40) in Übereinstimmung mit einem radial auswärts gerichteten Abstand der Platte (40) hat,

    dadurch **gekennzeichnet,** dass

    ein kugelförmiger Vorsprung (16) durch Bildung einer Vertiefung derart vorgesehen ist, dass er an dem Ende der Aufhängung (8) außerhalb der Flexionsteil-Montageposition in Richtung auf die Platte (40) vorsteht, und
    ein Antriebsmittel (36) zum Bewegen des Arms (2) derart, dass der Vorsprung (16) bei einem Lade- und einem Entladevorgang in einer gleitenden Punktberührung mit der abgeschrägten Oberfläche (24) bewegt wird.

2.  Plattengerät nach Anspruch 1, wobei der Vorsprung auf einer Tragplatte (14) für den Vorsprung (16) ausgebildet ist, die von der Aufhängung (8) getrennt ausgeführt ist, welche Vorsprung-Tragplatte (14) an der Aufhängung (8) befestigt ist.

3.  Plattengerät nach Anspruch 1, wobei der Vorsprung (16) in einem Stück mit der Aufhängung (8) ausgebildet ist.

4.  Plattengerät nach Anspruch 3, wobei die Aufhängung (8) an ihrem Umfang vorspringende Ränder (9) und einen flachen Bereich zwischen dem Flexionsteil (10) und dem kugelförmigen Vorsprung (16) hat, der nicht mit vorspringenden Rändern versehen ist.

5.  Aufhängung (8) nach einem der Ansprüche 1 bis 4, wobei ein Winkel für die Kopfverschieber-Montageoberfläche des Flexionsteil-Bereichs derart gewählt ist, dass ein Zwischenraum-abstand eines vorderen Endes (LE) des Kopfverschiebers (12) relativ zu der Platte (40) länger als ein Zwischenraumabstand eines hinteren Endes (TE) des Kopfverschiebers (12) relativ zu der Platte (40) ist.

6.  Aufhängung (8) nach Anspruch 5, wobei der Winkel für die Kopfverschieber-Montageoberfläche des Flexionsteil-Bereichs angenähert 0,3° beträgt.


**Revendications**

1.  Appareil à disque destiné à déplacer un bras (2) qui supporte un coulisseau (12) de tête et à positionner le coulisseau (12) de tête à une position prédéterminée d'un disque (40), comprenant :

    une suspension (8) fixée à une première extrémité au bras (2),
    un organe de flexion (10) placé au voisinage de l'autre extrémité de la suspension (8) et sur lequel est monté le coulisseau (12) de tête, et
    une base inclinée (20) ayant une surface inclinée (24) dont la distance augmente par rapport au disque (40) avec la distance radiale vers l'extérieur du disque (40),

    caractérisé par

    une saillie sphérique (16) obtenue par la formation d'une fossette et destinée à dépasser vers le disque (40) à l'extrémité qui se trouve au-delà de la position de montage de l'organe de flexion de la suspension (8), et
un dispositif d'entraînement (36) destiné à déplacer le bras (2) afin que la saillie (16) se déplace en contact glissant ponctuel avec la surface inclinée (24) lors d'une opération de chargement et de déchargement.

2.  Appareil à disque selon la revendication 1, dans lequel la saillie est formée sur une plaque (14) portant la saillie (16) et qui est séparée de la suspension (8), la plaque (14) portant la saillie étant fixée à la suspension (8).

3.  Appareil à disque selon la revendication 1, dans lequel la saillie (16) est formée en une seule pièce avec la suspension (8).

4.  Appareil à disque selon la revendication 3, dans lequel la suspension (8) a des flasques (9) à sa périphérie, et une région plate, démunie de flasques, entre l'organe de flexion (10) et la saillie sphérique (16).

5.  Suspension (8) selon l'une des revendications 1 à 4, dans laquelle l'angle de la surface de montage du coulisseau de tête de la région de l'organe de flexion est choisi afin que la distance séparant l'extrémité avant (LE) du coulisseau de tête (12) du disque (40) soit supérieure à la distance séparant l'extrémité arrière (TE) du coulisseau de tête (12) du disque (40).

6.  Suspension (8) selon la revendication 5, dans laquelle l'angle de la surface de montage du coulisseau de tête de la région de l'organe de flexion est d'environ 0,3°.

FIG. 1

FIG.2

# FIG.3

# FIG.4

# FIG.5

FIG.6A

FIG.6B

FIG.6C

FIG.6D

FIG.6E

FIG.6F

EP 0 658 882 B1

FIG.7A  FIG.7B  FIG.7C  FIG.7D  FIG.7E  FIG.7F

# FIG.8

EP 0 658 882 B1

# FIG.9

FIG.10A

FIG.10B

FIG.10C

FIG. 11A
PRIOR ART

FIG. 11B
PRIOR ART

FIG. 11C
PRIOR ART

FIG. 12

EP 0 658 882 B1

EP 0 658 882 B1

# FIG.13

6

10

12

8

LE

TE

DISK ROTATIONAL DIRECTION

40

## FIG. 14

# FIG. 15

MICROPROCESSOR

SINGLE CHIP DRIVE IC

MODE CONT. — 71

SPINDLE SEQ. — 72

SPINDLE DRIVER — 81

SPINDLE MOTOR — 50

UNLOAD POWER DET. — 82

D/A CON. — 73

BUF. — 74

VCM DRIVER — 83

V C M — 36

V/P DET. DEVICE — 90

A/D CON. — 75

VCM BEMF DET. — 84

VCM V/P DET. — 85

SERVO SIG.

70

80

EP 0 658 882 B1

FIG. 16

EP 0 658 882 B1

## FIG.17

VCM θ DIRECTION 77mm/s
Z DIRECTION 7.7mm/s

AE WAVE LEVEL
(10mV/1 SCALE)
SLIDER POSITION DATA
(2V/1 SCALE)

AE WAVE

SLIDER POSITIONAL
SIG.

-25000.0μs          25000.0μs  TIME

LOAD
START

## FIG.18

VCM θ DIRECTION 30mm/s
Z DIRECTION 3mm/s

AE WAVE LEVEL
(10mV/1 SCALE)
SLIDER POSITION DATA
(2V/1 SCALE)

AE WAVE

SLIDER POSITIONAL
SIG.

-10000.0μs          40000.0μs  TIME

UNLOAD
START

## FIG.19

VCM θ DIRECTION 83mm/s
Z DIRECTION 8.3mm/s

AE WAVE LEVEL
(10mV/1 SCALE)
SLIDER POSITION DATA
(2V/1 SCALE)

AE WAVE

SLIDER POSITIONAL
SIG.

-25000.0μs          25000.0μs  TIME

LOAD
START

## FIG.20

VCM θ DIRECTION  23mm/s
Z DIRECTION  2.3mm/s

AE WAVE LEVEL
(10mV/1 SCALE)
SLIDER POSITION DATA
(2V/1 SCALE)

AE WAVE

SLIDER
POSITIONAL
SIG.

40.000ms          100.000ms          TIME

UNLOAD
START

## FIG.21

VCM θ DIRECTION  176mm/s
Z DIRECTION  18mm/s

SLIDER POSITIONAL
SIG.

AE WAVE LEVEL
(10mV/1 SCALE)
SLIDER POSITION DATA
(2V/1 SCALE)

AE WAVE

-10000.0μs          40000.0μs          TIME

## FIG.22

VCM θ DIRECTION  580mm/s
Z DIRECTION  58mm/s

AE WAVE LEVEL
(10mV/1 SCALE)
SLIDER POSITION DATA
(2V/1 SCALE)

AE WAVE

SLIDER
POSITIONAL
SIG.

-10000.0μs          40000.0μs          TIME

25

# FIG.23

VCM θ DIRECTION  166mm/s
Z DIRECTION  17mm/s

AE WAVE LEVEL
(20mV/1 SCALE)
SLIDER POSITION DATA
(5V/1 SCALE)

SLIDER POSITIONAL SIG.

AE WAVE

-10000.0 µs    40000.0 µs  TIME

# FIG.24

VCM θ DIRECTION  267mm/s
Z DIRECTION  27mm/s

SLIDER POSITIONAL SIG.

AE WAVE LEVEL
(10mV/1 SCALE)
SLIDER POSITION DATA
(2V/1 SCALE)

AE WAVE

-10000.0 µs    40000.0 µs  TIME

# FIG.25

(a) LOAD VELOCITY 25mm/sec

AE WAVE LEVEL — 50.0mV / −50.0mV / −8.000ms / 2.000ms TIME

(b) LOAD VELOCITY 15mm/sec

AE WAVE LEVEL — 50.0mV / −50.0mV / −8.000ms / 2.000ms TIME

(c) LOAD VELOCITY 10mm/sec

AE WAVE LEVEL — 50.0mV / −50.0mV / −8.000ms / 2.000ms TIME

(d) LOAD VELOCITY 3mm/sec

AE WAVE LEVEL — 50.0mV / −50.0mV / −8.000ms / 2.000ms TIME

(e) LOAD VELOCITY 1mm/sec

AE WAVE LEVEL — 50.0mV / −50.0mV / −8.000ms / 2.000ms TIME

# FIG.26

(a) LOAD VELOCITY 25mm/sec

(b) LOAD VELOCITY 15mm/sec

(c) LOAD VELOCITY 10mm/sec

(d) LOAD VELOCITY 3mm/sec

(e) LOAD VELOCITY 1mm/sec

# FIG.27

# FIG.28

FIG.29

# FIG. 30

FIG. 31

8A

9A

12

16A

# FIG.32

10A 8A

12

$\theta_p - D$

# FIG.33

8A

9A 9A

FIG.34

FIG.35

EP 0 658 882 B1

9B

8B

16B

## FIG.36

## FIG.37

## FIG.38

EP 0 658 882 B1

# FIG.39

FIG. 40

EP 0 658 882 B1

# FIG.41

6

10P

12P

8P

LE

TE

DISK ROTATIONAL
DIRECTION

40